# EUROPÄISCHE PATENTANMELDUNG

(11) **EP 1 041 018 A2**
(43) Veröffentlichungstag der Anmeldung: **04.10.2000**
(21) Anmeldenummer: 00104493.2
(22) Anmeldetag: 09.03.2000
(51) Int. Cl.: B65G 1/14

(54) **Vorrichtung und Verfahren zum Transportieren und Lagern von Produkten**

(30) Priorität: 30.03.1999 US 282093
(71) Anmelder: Heidelberger Druckmaschinen Aktiengesellschaft, 69115 Heidelberg (DE)
(72) Erfinder: Cote, Kevin Lauren, Durham, NH 03824 (US); Curley, Richard Daniel, Dover, NH 03820 (US)
(74) Vertreter: Duschl, Edgar Johannes, Dr.

(57) **Zusammenfassung**

Die vorliegende Erfindung betrifft eine Vorrichtung und ein Verfahren zum Transportieren und Lagern von gefalzten Signaturen. Ein Bündel gefalzter Signaturen wird nach seiner Bearbeitung, z. B. in einem Falzapparat (1) einer Druckmaschine (P), gestapelt oder gebündelt. Ein leeres Lagerungselement (7), welches vorzugsweise ein Paar Lagertrommeln umfasst, wird auf einer Förderbahn (4) zu dem Stapel gefalzter Signaturen transportiert. Das Bündel oder der Stapel wird mittels an mindestens einer der Lagertrommeln angeordneten Klemm- oder Greifelementen zwischen dem Lagertrommelpaar festgeklemmt. Nach dem Beladen des Lagerungselements mit gestapelten oder gebündelten Signaturen wird es durch eine Förderbahn zu einem automatischen Lager- und Entnahmesystem (5) transportiert. Das automatische Lager- und Entnahmesystem (5) umfasst vorzugsweise eine Vielzahl von Lagerbereichen (E, F) und Förderbahnen (4), welche dazu eingesetzt werden, die Lagerungselemente automatisch zu einem den mit bestimmten Signaturen beladenen Lagerelementen zugewiesenen Lagerbereich (F) zu transportieren. Das automatische Lager- und Entnahmesystem (5) lokalisiert ein bestimmtes Lagerungselement (8) und transportiert es mittels einer geeigneten Transportbahn (6) zu einer Weiterverarbeitungsstation, z. B. einer Bindemaschine (B). An der Weiterverarbeitungsstation werden die gebündelten Signaturen gelöst, von dem Lagerungselement abgeladen und zu einem geeigneten Anleger befördert. Der Anleger führt die einzelnen gefalzten Signaturen Zusammentrag- oder Heftvorrichtungen zu, in denen die gefalzten Signaturen zu einer Zeitschrift oder einem Buch weiterverarbeitet werden.

## Beschreibung

Die vorliegende Erfindung betrifft eine Vorrichtung und ein Verfahren zum Transportieren und Lagern von Produkten, insbesondere zum automatischen Transportieren und Lagern von Bündeln oder Stapeln von in einer Druckmaschine bearbeiteten, gefalzten Signaturen, welche z. B. später in einer Bindemaschine weiter bearbeitet werden sollen.

In Druckereimaschinensystemen, welche zur Buch- oder Zeitschriftenproduktion eingesetzt werden, werden Bedruckstoffe bedruckt, gefalzt und anschließend in einer Bindemaschine gebunden. In einer Bindemaschine werden die gefalzten Signaturen zusammengetragen, geheftet und/oder gebunden, so dass ein fertiges Druckprodukt, z. B. eine Zeitschrift oder ein Buch, entsteht.

Zwischen dem Falz- und dem Bindevorgang werden die Signaturen in der Regel gesammelt und zwischengelagert. Häufig ist eine Zwischenlagerung der gefalzten und gesammelten Signaturenbündel nötig, da der Druckprozess und der Bindeprozess nicht gleichzeitig oder nicht mit derselben Geschwindigkeit durchgeführt werden.

Wird dann ein bestimmtes Bündel gefalzter Signaturen in der Bindemaschine benötigt, so wird dieses Bündel gefalzter Signaturen dem Lager entnommen und zu der Bindemaschine transportiert.

Es gibt verschiedene bekannte Möglichkeiten der Lagerung von Signaturen. Eine Möglichkeit besteht darin, die gefalzten Signaturen in einen Schuppenstrom zu bringen, den Schuppenstrom anschließend aufzurollen, mit Trennstreifen zu versehen und in einen Zylinder oder ähnlichen Behälter einzufügen, der dann zwischengelagert wird. Die Signaturen werden bei Bedarf in dem Zylinder oder ähnlichen Behälter zu der Bindemaschine transportiert, dem Behälter entnommen, wieder in einen Schuppenstrom gebracht und so der Bindemaschine zugeführt. Eine weitere Möglichkeit der Lagerung besteht darin, die gefalzten Signaturen in Bündeln zusammenzutragen und auf Paletten zu stapeln. Die Stapel werden häufig auf der Palette nach herkömmlichen Methoden, z. B. mit Kunststoffbändern oder Kunststofffolie, provisorisch verschnürt oder mit Begrenzungselementen aus Holz oder Kunststoff in Position gehalten. Nach einem weiteren Verfahren wird ein Bündel gefalzter Signaturen in einen Schuppenstrom zusammengetragen und dann auf Metalltabletts abgelegt.

Bei all diesen bekannten Lagermethoden werden die gestapelten, zusammengerollten oder geschuppten gefalzten Signaturen mit einer Transportvorrichtung, z. B. einem Gabelstapler oder einem führerlosen Transportmittel. zu einem Lagerbereich transportiert, z. B. einer Räche in einem Lagerhaus oder einem industriellen Lagerregal mit vertikalen Lagerflächen.

Nach dem Lagern werden die gestapelten, zusammengerollten oder geschuppten gefalzten Signaturen mit einem Gabelstapler oder einem führerlosen Transportmittel zu der Bindemaschine transportiert.

Die bekannten Lagerungs- und Transportmethoden für gefalzte Signaturen weisen einige Nachteile auf. Zunächst einmal entstehen durch die Art der Lagerung mittels Zylindern oder Paletten Druckstellen, wodurch die gefalzten Signaturen beschädigt werden und so die Qualität des gebundenen Produktes beeinträchtigt wird, und zudem unter Umständen Probleme, z. B. Papierstaus, bei der Bearbeitung in der Bindemaschine entstehen. Außerdem werden durch die zum Verschnüren einer Rolle oder eines Stapels gefalzter Signaturen nach dem Stand der Technik benötigten Verbrauchsmaterialien, z. B. Kunststoffbänder oder Kunststofffolie, Trennstreifen oder Bengrenzungselemente, die Kosten für den Druck- und Bindeprozess erhöht. Die bekannten Transportmethoden, z. B. Gabelstapler oder führerlose Transportmittel, erfordern entweder die Beschäftigung zusätzlicher Arbeitskräfte oder sind kostenintensiv.

Aufgabe der vorliegenden Erfindung ist es daher, ein verbessertes Verfahren und eine verbesserte Vorrichtung zum Lagern und Transportieren gefalzter Produkte vorzuschlagen.

Erfindungsgemäß wird diese Aufgabe durch die Merkmale der Ansprüche 2 und 5 gelöst.

Durch die erfindungsgemäße Vorrichtung und das erfindungsgemäße Verfahren zum Transportieren und Lagern von gefalzten Signaturen werden die Nachteile der Vorrichtungen und Verfahren des Standes der Technik beseitigt. Die vorliegende Erfindung ist zwar hier im Zusammenhang mit in einer Druckmaschine bearbeiteten, gefalzten Signaturen beschrieben, kann jedoch auch in anderen Bereichen eingesetzt werden, in denen ein kostengünstiges Transportieren und Lagern von Produkten zur späteren Weiterverarbeitung erforderlich ist.

Gemäß der vorliegenden Erfindung wird ein Bündel von gefalzten Signaturen nach deren Bearbeitung z. B. in einem Falzapparat einer Druckmaschine gestapelt oder gebündelt. Ein leeres Lagerelement, welches vorzugsweise ein Paar Lagertrommeln umfasst, wird auf einer Förderbahn zu dem Stapel gefalzter Signaturen transportiert. Die Bezeichnung 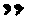 Lagertrommel" wird in Zusammenhang mit der vorliegenden Erfindung beispielhaft für eine beliebige Vorrichtung verwendet, mittels derer ein Ende oder eine Seite eines Bündels oder Stapels von Produkten erfasst werden kann und die eine Drehbewegung und eine geradlinige Bewegung der gebündelten oder gestapelten Produkte entlang einer Förderbahn ermöglicht. Die Förderbahn kann insbesondere eine so genannte teilangetriebene Förderbahn sein, in der ein Ende des Lagerungselements entlang einer Führungsbahn angetrieben wird und das andere Ende in der Führungsbahn frei beweglich ist. Die Förderbahn umfasst vorzugsweise eine Vielzahl von automatischen Führungselementen und Weichen, mittels derer die Position der einzelnen Lagerungselemente in der Förderbahn jederzeit feststellbar ist und die einzelnen Lagerungselemente in die gewünschte Position transportiert werden können.

Ein leeres Lagerungselement wird durch geradlinige Bewegung und Drehbewegung auf gleiche Höhe mit einem aus einem Falzapparat austretenden Bündel oder Stapel gefalzter Signaturen gebracht, das als Bündel oder Stapel von dem Falzapparat weg transportiert wird. Das Bündel oder der Stapel wird z. B. mittels Klemm- oder Greiferelementen an mindestens einem der Lagertrommeln zwischen den Lagertrommeln des Lagerungselements festgeklemmt. Anschließend kann das Lagerungselement frei oder in Rasterschritten gedreht werden, so dass es einen weiteren Stapel oder ein weiteres Bündel aufnehmen kann. Dieser Vorgang wird so lange fortgeführt, bis das Lagerungselement vollständig mit gebündelten oder gestapelten gefalzten Signaturen beladen ist.

Nach vollständiger Beladung des Lagerungselements mit gebündelten oder gestapelten gefalzten Signaturen wird es von einer Fürderbahn, die vorzugsweise einen Abschnitt der teilangetriebenen Förderungsbahn darstellt, zu einem automatischen Lager- und Entnahmesystem weiterbewegt. Das Lager- und Entnahmesystem umfasst vorzugsweise eine Vielzahl von Lagerflächen und Förderbahnen, mittels derer die Lagerungselemente automatisch zu dem für Lagerungselemente mit den entsprechenden Stapeln oder Bündeln gefalzter Signaturen vorgesehene Bereich bewegt werden. Die Förderbahnen des automatischen Lager- und Entnahmesystems bilden vorzugsweise einen Teil der gesamten teilangetriebenen Förderbahn und umfassen vorzugsweise Führungselemente und Weichen, welche die Lagerungselemente in die korrekte Position bewegen. Die Lagerungselemente werden innerhalb des automatischen Lager- und Entnahmesystems in Gruppen gelagert, bis die Bündel oder Stapel gefalzter Signaturen eines bestimmten Lagerungselements weiter verarbeitet, z. B. einer Bindemaschine zugeführt werden sollen. In diesem Fall wird das entsprechende Lagerungselement dem automatischen Lager- und Entnahmesystem entnommen und mittels einer geeigneten Förderbahn zu einer Weiterverarbeitungseinrichtung, z. B. einer Bindemaschine, bewegt.

An der Bindemaschine werden die gebündelten oder gestapelten gefalzten Signaturen freigegeben, entladen und einem geeigneten Anlegemechanismus zugeführt. Ein Schaltmechanismus dreht die Lagerungselemente in definierten Schritten weiter, so dass alle Stapel entladen werden. Die Stapel werden vorzugsweise mittels einer schaltbaren Förderbahn dem Anleger der Bindemaschine zugeführt, von dem die einzelnen Signaturen z. B. Zusammentrageinrichtungen oder Heftvorrichtungen zugeführt werden, in denen die gefalzten Signaturen zusammengetragen und zu einem fertigen Druckprodukt, z. B. einem Buch oder einer Zeitschrift, gebunden oder geheftet werden. Nachdem alle gebündelten oder gestapelten gefalzten Signaturen eines Lagerungselements entladen worden sind, wird das leere Lagerungselement mittels einer Förderbahn wieder zu dem automatischen Lager- und Entnahmesystem zurückgeführt.

Die vorliegende Erfindung bietet den Vorteil, dass das gesamte Lagerungselement wieder verwendet werden kann und keine Verbrauchsmaterialien benötigt werden. Es entstehen auch keine Druckstellen in den gefalzten Signaturen. Ferner können Transport und Lagerung der Lagerungselemente ganz oder teilweise automatisch erfolgen, was die Beschäftigungskosten reduziert. Damit bietet die vorliegende Erfindung zahlreiche Vorteile gegenüber dem Stand der Technik.

Weitere Vorteile und vorteilhafte Ausführungsformen sind Gegenstand der nachfolgend dargestellten Figuren sowie deren Beschreibungen.

Es zeigen:
- Fig. 1: eine systematische, perspektivische Übersicht des erfindungsgemäßen Systems;
- Fig. 2: eine perspektivische Detailansicht einer Falzapparatauslage, eines schaltbaren Transportsystems für Bündel oder Stapel, einer Beladevorrichtung für Lagerungselemente und einer teilangetriebenen Förderbahn, wie sie an der Auslage der Druckmaschine des Systems von Fig. 1 eingesetzt wird;
- Fig. 3: eine Seitenansicht der in Fig. 2 gezeigten Komponenten;
- Fig. 4: eine perspektivische Darstellung einer ersten Ausführungsform eines Lagerungselements gemäß der vorliegenden Erfindung;
- Fig. 5: eine Vorderansicht des in Fig. 4 gezeigten Lagerungselements;
- Fig. 6: eine Seitenansicht des in Fig. 4 gezeigten Lagerungselements;
- Fig. 7: eine Seitenansicht einer alternativen Ausführungsform des in Fig. 4 gezeigten Lagerungselements;
- Fig. 8: eine perspektivische Darstellung einer weiteren Ausführungsform eines Lagerungselements gemäß der vorliegenden Erfindung;

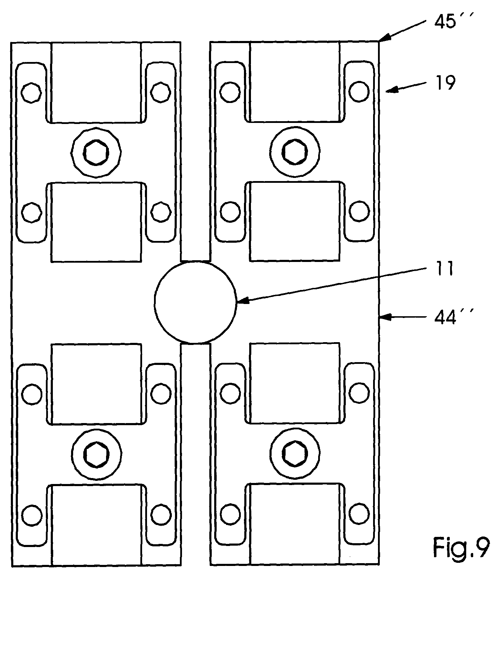

- Fig. 9: eine Vorderansicht des in Fig. 8 gezeigten Lagerungselements;

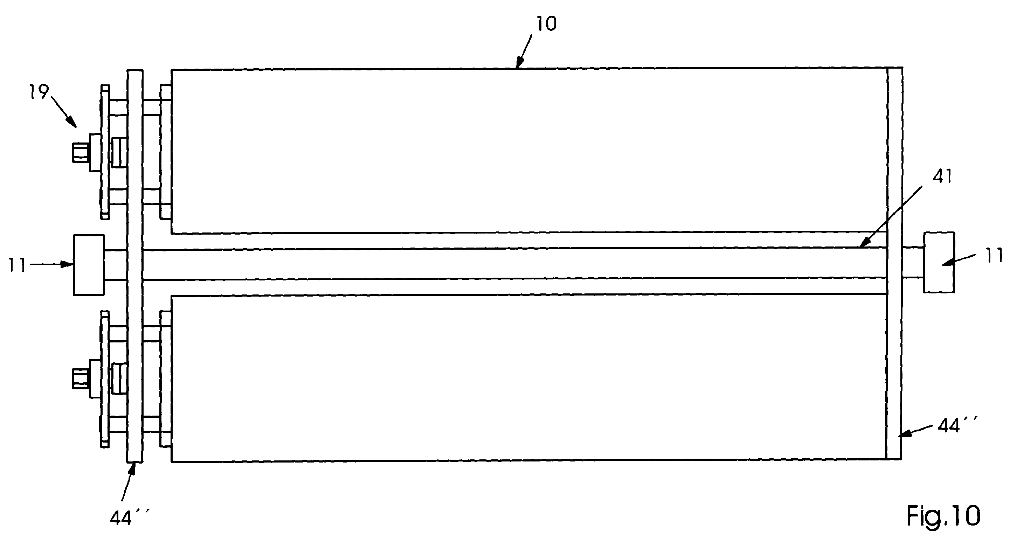

- Fig. 10: eine Seitenansicht des in Fig. 8 gezeigten Lagerungselements;
- Fig. 11: eine perspektivische Teilansicht des Anleger- und Entladesystems einer Bindemaschine gemäß der vorliegenden Erfindung;
- Fig. 12: eine Seitenansicht des in Fig. 11 gezeigten Systems;
- Fig. 13: eine Vorderansicht des in Fig. 11 gezeigten Systems.

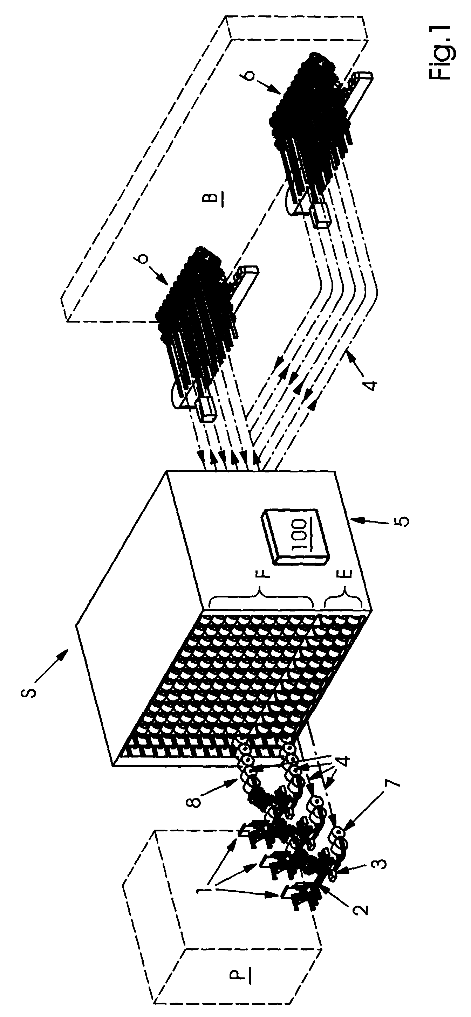

Fig. 1 zeigt einen Überblick über das Transport- und Lagerungssystem S der vorliegenden Erfindung. In der bevorzugten Ausführungsform der vorliegenden Erfindung wird das System S zum Transport und zur Lagerung von Stapeln oder Bündeln von in einer Druckmaschine P bearbeiteten, gefalzten Signaturen eingesetzt; es ist jedoch nicht auf diese Anwendung beschränkt und kann auch zum Transport und zur Lagerung anderer gestapelter oder gebündelter Produkte eingesetzt werden.

Bei der Druckmaschine P kann es sich um eine beliebige herkömmliche Druckmaschine handeln, in der eine Bahn oder Bogen ein- oder beidseitig bedruckt werden. Nach dem Druckvorgang werden die Bahn oder die Bogen einem Falzapparat 1 zugeführt, welcher ferner einen Schneidemechanismus umfassen kann, der eine Bahn in Signaturen schneidet. In dem Falzapparat 1 werden die Signaturen einmal oder mehrmals gefalzt. Wie in Fig. 1 gezeigt ist, kann in der Druckmaschine eine beliebige Anzahl verschiedener Arten von Signaturen produziert werden, die anschließend jeweils einem von einer Vielzahl von Falzapparaten 1 zugeführt werden, wobei in jedem der Falzapparate jeweils ein Bündel von Signaturen mit demselben Druckbild bearbeitet wird. Der Falzapparat 1 kann ein beliebiger, herkömmlicher Falzapparat sein und wird hier nicht näher beschrieben. Die in dem Falzapparat 1 erzeugten gefalzten Signaturen werden anschließend einem schaltbaren Fördersystem 2 zugeführt, in dem einzelne gefalzte Signaturen zu Bündeln oder Stapeln zusammengefasst und einem Beladesystem 3 für Lagerungselemente zugeführt werden.

Über eine Förderbahn 4, welche in der bevorzugten Ausführungsform der Erfindung als eine teilangetriebene Förderbahn ausgestaltet ist, werden dem Beladesystem 3 leere Lagerungselemente 7 zugeführt, die zuvor der Förderbahn 4 von einem geeigneten Lagerbereich E für leere Lagerungselemente 7 innerhalb eines automatischen Lager- und Entnahmesystems 5 zugeführt wurden. Durch das Beladesystem 3 wird das leere Lagerungselement 7 so positioniert, dass es ein Bündel oder einen Stapel von der schaltbaren Bündel-Transportbahn 2 übernehmen kann. Dann belädt das Beladesystem 3 das leere Lagerungselement 7 mit einem Bündel oder Stapel, der in dem Lagerungselement 7 festgeklemmt oder auf andere Weise befestigt wird. Das Lagerungselement kann dann derart in definierten Schritten weiter gedreht werden, dass es weitere Bündel oder Stapel aufnehmen kann.

Nach der Beladung des Lagerungselements mit Bündeln oder Stapeln wird das beladene Lagerungselement 8 mittels einer geeigneten Förderbahn 4, vorzugsweise einer teilangetriebenen Förderbahn, von dem Beladesystem 3 weg zu einem automatischen Lager- und Entnahmesystem 5 befördert, das die beladenen Lagerungselemente 8 an eine geeignete Lagerbereich F für beladene Lagerungselemente 8 innerhalb des Lager- und Entnahmesystems 5 transportiert, wo die beladenen Lagerungselemente 8 bis zur Weiterverarbeitung der in ihnen gelagerten Signaturen gelagert werden.

Die Lagerungselemente 8 werden an ihren Lagerbereichen F von dem automatischen Lager- und Entnahmesystem 5 lokalisiert und mittels einer geeigneten Förderbahn 4, vorzugsweise einer teilangetriebenen Förderbahn, zum Entladesystem 6 für Lagerungselemente transportiert, wo die Bündel oder Stapel gefalzter Signaturen von dem Lagerungselement 8 entladen und einem Anleger zugeführt werden, der die gefalzten Signaturen einzeln der Bindemaschine B zuführt, wo sie zu einem fertigen Druckprodukt, z. B. einem Buch oder einer Zeitschrift, zusammengetragen, geheftet und/oder gebunden werden. Die Bindemaschine B kann eine beliebige, hier nicht näher beschriebene herkömmliche Bindemaschine sein. Die leeren Lagerungselemente 7 werden mittels der Förderbahn von dem Entladesystem 6 weg zurück zu dem automatischen Lager- und Entnahmesystem 5 transportiert und in den Lagerbereichen E für leere Lagerungselemente 7 in dem Lager- und Entnahmesystem 5 gelagert, bis sie wieder an dem Beladesystem 3 gebraucht werden.

Der gesamte Betrieb des Systems S wird vorzugsweise über eine geeignete Steuervorrichtung 100, z. B. einen Computer, gesteuert. Die Steuervorrichtung umfasst vorzugsweise eine Vielzahl von (nicht gezeigten) Eingängen, durch die ihr Informationen über die verschiedenen Vorrichtungen und Systeme des Gesamtsystems zugeführt werden, z. B. von der Druckmaschine P, den Falzapparaten 1, den Bündel-Transportsystemen 2, dem Beladesystem 3, den Förderbahnen 4, dem automatischen Lager- und Entnahmesystem 5, dem Entladesystem 6 und der Bindemaschine B. Auf diese Weise kann der Betrieb des Systems S automatisch gesteuert werden. Die Eingaben können durch einen Bediener über eine Tastatur oder andere Eingabevorrichtungen vorgenommen werden oder über Sensoren erfolgen, die den Zustand der verschiedenen Bestandteile und Systeme des Systems S automatisch überwachen. Über die Steuervorrichtung 100 können somit leere Lagerungselemente 7 automatisch dem Abschnitt des Systems S zugeführt werden, in denen sie beladen werden, beladene Lagerungselemente 8 automatisch zur Lagerung dem automatischen Lager- und Entnahmesystem 5 zugeführt werden, bei Bedarf die beladenen Lagerungselemente 8 lokalisiert und dem Abschnitt des Systems S zugeführt werden, in dem sie entladen werden, und schließlich die Lagerungselemente automatisch entladen und zurück zu dem automatischen Lager- und Entnahmesystem 5 transportiert werden.

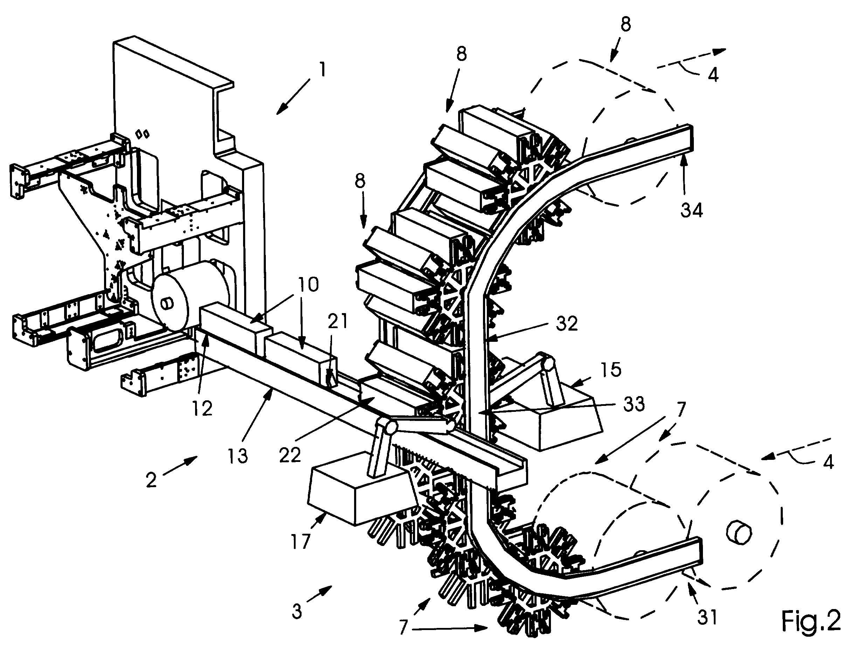

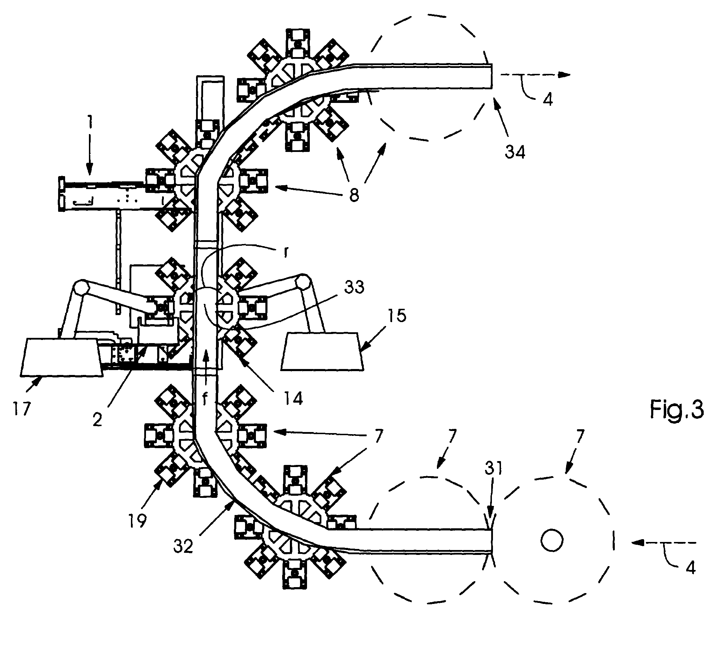

Fig. 2 ist eine Detailansicht des Abschnitts des Systems S, in dem die leeren Lagerungselemente 7 beladen werden. Leere Lagerungselemente 7, die durch die gestrichelte Linie dargestellt sind, werden von der Förderbahn 4 an die Anlegerseite 31 des Beladesystems 3 transportiert. Wie bereits zuvor erläutert, werden die leeren Lagerungselemente 7 vorzugsweise von der Förderbahn 4 von den Lagerbereichen E (Fig. 1) in dem automatischen Lager- und Entnahmesystem 5 weg transportiert. Das Beladesystem 3 umfasst vorzugsweise eine Führungsbahn 32, welche leere Lagerungselemente 7 in eine Richtung f (Fig. 3) in eine Beladeposition 33 bewegt, wo die leeren Lagerungselemente 7 mit Bündeln oder Stapeln 10 gefalzter Signaturen beladen werden. Nach dem Beladen werden die beladenen Lagerungselemente 8 entlang der Führungsbahn 32 zu einem Austrittsende 34 des Beladesystems 3 bewegt und der Transportbahn 4 übergeben, die die beladenen Lagerungselemente 8 vorzugsweise in die Lagerungsbereiche F des automatischen Lager- und Entnahmesystems 5 transportiert.

Der dem Beladesystem 3 zugeordnete Falzapparat kann ein beliebiger, nicht näher beschriebener herkömmlicher Falzapparat sein und ist daher in Fig. 1-3 nicht im Detail dargestellt. Wie es nach dem Stand der Technik üblich ist, werden dem Falzapparat eine in einer Druckmaschine P bedruckte Bahn oder in einer Druckmaschine P bedruckte Bogen zugeführt, die in dem Falzapparat zu einzelnen gefalzten Signaturen verarbeitet werden. Die einzelnen gefalzten Signaturen werden anschließend zu einer Auslage 12 und zu dem schaltbaren Transportsystem 2 transportiert, wo sie mittels herkömmlicher Bündelvorrichtungen z. B. der Firma Baldwin oder Cieveime, die einen Magazinlader umfassen können, gebündelt werden. Dann werden sie einer z. B. als Sammel-Transportbahn ausgebildeten Bündel-Transportbahn 13 zugeführt. Ein Vorderkantenelement 21 auf dem Bündel-Transportsystem 2 bildet eine Fläche, an der die gefalzten Signaturen anliegen. Die Hinterkante eines Stapels oder Bündels 10 liegt an einem (nicht gezeigten) Hinterkantenelement an. Das Vorderkantenelement 21 und das Hinterkantenelement werden von der Bündel-Transportbahn 13 beschleunigt, so dass sie die Bündel oder Stapel 10 auf das Beladesystem 3 zu bewegen.

Die Bündel oder Stapel 10 werden dann von der Bündel-Transportbahn 13 in eine Beladeposition 22 bewegt, wo die Bündel oder Stapel 10 auf ein in Position 33 befindliches leeres Lagerungselement 7 geladen werden. An der Beladeposition 33 sind eine automatische Klemmvorrichtung 17 und eine automatische Schaltvorrichtung 15 angeordnet, welche beide vorzugsweise als Roboterarme ausgebildet sind, aber auch als jede andere Art von automatischer Vorrichtung ausgebildet sein können, die diese Funktionen erfüllen kann, z. B. auch als hydraulische oder pneumatische Kolben oder Drehmotoren.

Die automatische Schaltvorrichtung 15 dreht das in der Beladeposition befindliche Lagerungselement 7 in eine Richtung r, so dass das Bündel oder der Stapel 10 in der Beladeposition 22 auf ein leeres Klemm- oder Greifelement 19 des Lagerungselements 7 trifft. Sobald das Lagerungselement 7 in diese Position gedreht ist, erfasst die automatische Klemmvorrichtung 17 das Klemm- oder Greifelement 19, welches mit dem Bündel oder Stapel 10 ausgerichtet ist, und klemmt das Bündel oder den Stapel 10 in dem Lagerungselement 7 fest. Das Lagerungselement 7 wird dann weiter gedreht, so dass ein weiteres Bündel oder ein weiterer Stapel 10 erfasst werden kann. Dieser Dreh- und Klemmvorgang wird so lange fortgeführt, bis sämtliche Klemm- oder Greifelemente 19 des in Position 33 befindlichen Lagerungselements 7 mit Windeln oder Stapeln 10 beladen sind. Die automatische Schaltvorrichtung 15 und das automatische Klemmelement 17 werden dann vorzugsweise zurückgezogen, das beladene Lagerundelement 8 wird entlang der Führungsbahn 32 weiter bewegt und eine leeres Lagerungselement 7 wird in die Beladeposition 33 bewegt. Wie bereits zuvor erläutert werden die beladenen Lagerungselemente 8 von einer Auslage 34 des Beladesystems 3 an die Transportbahn 4 übergeben, welche die beladenen Lagerungselemente 8 vorzugsweise in den Lagerbereich F in dem automatischen Lager- und Entnahmesystem 5 transportiert.

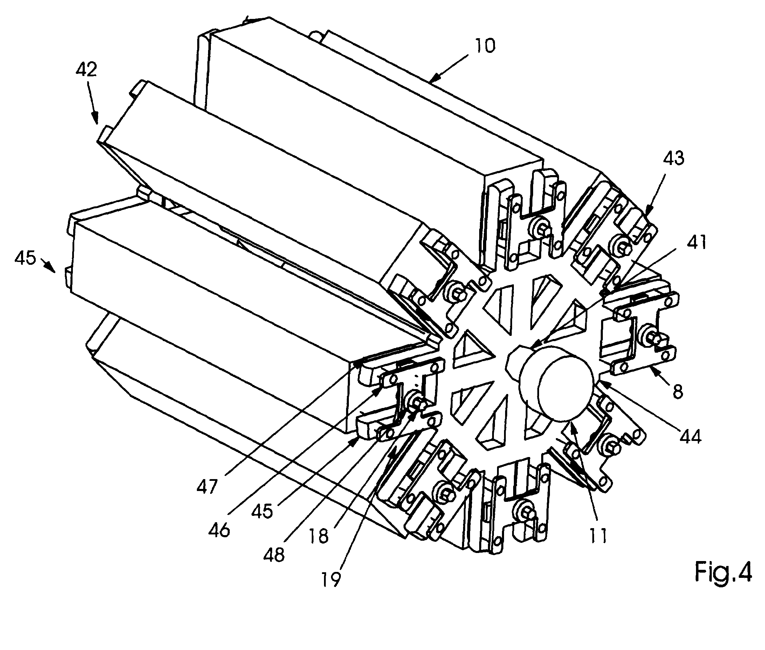

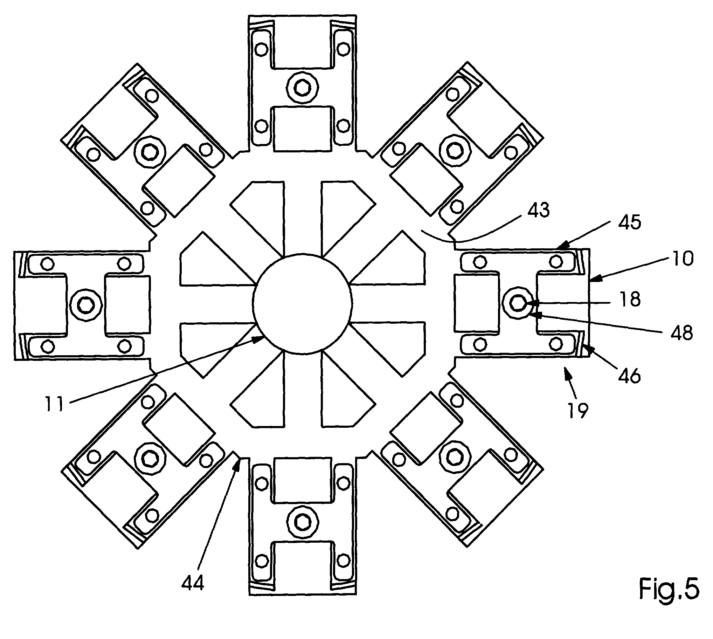

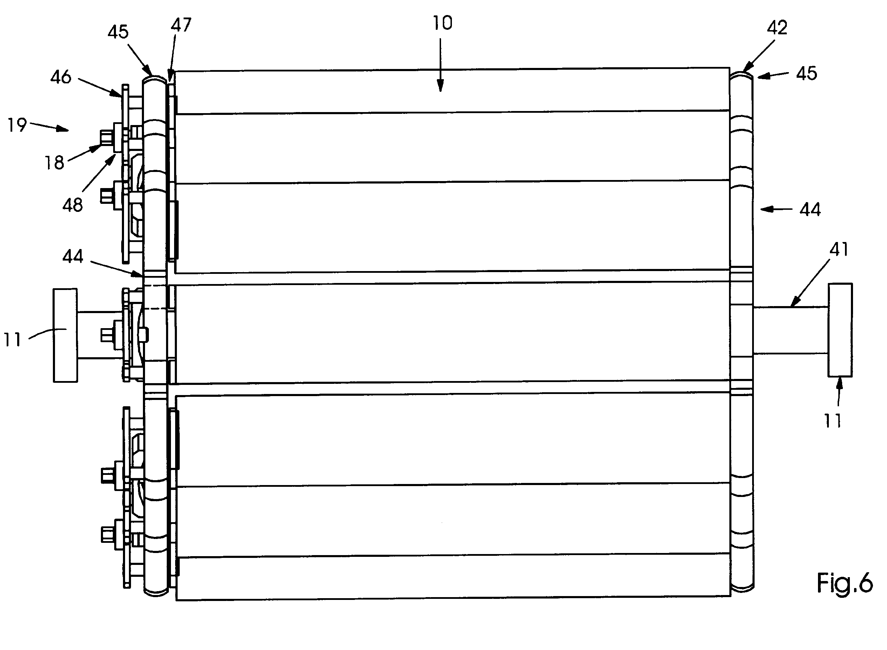

Fig. 4-6 zeigen Detailansichten einer Ausführungsform eines erfindungsgemäßen Lagerungselements. Das in Fig. 4-6 gezeigte Lagerungselement ist ein beladenes Lagerungselement 8, dessen sämtliche Klemm- oder Greifelemente 19 mit Bündeln oder Stapeln 10 beladen sind. Das Lagerungselement 8 umfasst eine Welle 41 mit an gegenüberliegenden Enden angeordneten Lagertrommeln 42, 43. Eine der Lagertrommeln ist eine ortsfeste Lagertrommel 42, während die andere Lagertrommel eine verstellbare Klemmlagertrommel 43 ist. Beide Lagertrommeln 42, 43 umfassen eine an einem Ende der Welle 41 angeordnete Nabe 11 und an der Welle 41 angeordnete Rahmen 44. Beide Rahmen 44 umfassen radial aus der Welle hervortretende Klemmarme 45, die mit einem Klemmarm 45 der gegenüberliegenden Lagertrommel ausgerichtet sind. Gegenüberliegende Klemmarme 45 bilden somit gegenüberliegende Enden des Klemin- oder Greifelements 19 zum Greifen oder Klemmen der Bündel oder Stapel 10. An der festen Lagertrommel 42 kann das Ende des Bündels oder Stapels 10 unmittelbar an dem Klemmarm 45 anliegen. An der verstellbaren Lagertrommel 43 umfassen die Klemmarme 45 vorzugsweise verstellbare Klemmelemente 46. Das verstellbare Klemmelement 46 umfasst eine verstellbare Klemmfläche oder ein Klemmblech 47 und eine Gewindeschraube oder einen Gewindebolzen 18, welcher in eine Gewindebohrung oder ein Gewindelager 48 an dem Klemmann 45 eingeschraubt und mit der verstellbaren Klemmfläche 47 verbunden ist. Durch Drehung des Kopfes der Klemmschraube oder des Klemmbolzens 18 in die eine Richtung wird die verstellbare Klemmfläche 47 auf das Bündel oder den Stapel 10 zu bewegt, und durch Drehung des Kopfes der Klemmschraube oder des Klemmbolzens 18 in die andere Richtung wird die verstellbare Klemmfläche oder das verstellbare Klemmblech 47 von dem Bündel oder Stapel 10 weg bewegt, so dass dieser freigegeben wird. Auf diese Weise kann die automatische Klemmvorrichtung 17 dazu eingesetzt werden, den Kopf der Klemmschraube oder des Klemmbolzens 18 zu drehen, so dass ein in der Beladeposition 22 befindliches Bündel oder ein Stapel 10 auf das Lagerungselement 7 geladen werden kann. Die Schraube oder der Bolzen 18 ist vorzugsweise eine selbst-verriegelnde Schraube. Die automatische Klemmvorrichtung 17 dreht die Schraube oder den Bolzen 18 vorzugsweise um ein vorgegebenes Maß, das ausreicht, um das Bündel oder den Stapel 10 zu halten und das z. B. mittels einer Rückkopplungsschleife gemessen und übertragen wird.

Die Naben 11 sind so gestaltet, dass sie in der Führungsbahn 32 laufen können, so dass die Lagerungselemente mittels eines geeigneten, bekannten Antriebsmechanismus entlang der Führungsbahn 32 bewegt werden können. Der Antriebsmechanismus ist vorzugsweise Bestandteil des gesamten teilangetriebenen Transportbahnsystems 4.

Die Welle 41 ist vorzugsweise über ein geeignetes Lager, z. B. ein Zapfenlager, mit den Naben 11 derart verbunden, dass die Welle 41 (und die mit der Welle 41 verbundenen Rahmen 44, Arme 45 und Klemm- oder Greifelemente 19) bezüglich der Naben 11 und der Führungsbahn 32 drehbar ist. Dadurch kann die automatische Schaltvorrichtung 15 die Klemm- oder Greifelemente 19 in die richtige Position bringen, so dass sie auf die zuvor beschriebene Weise mit Bündeln oder Stapeln 10 beladen werden können.

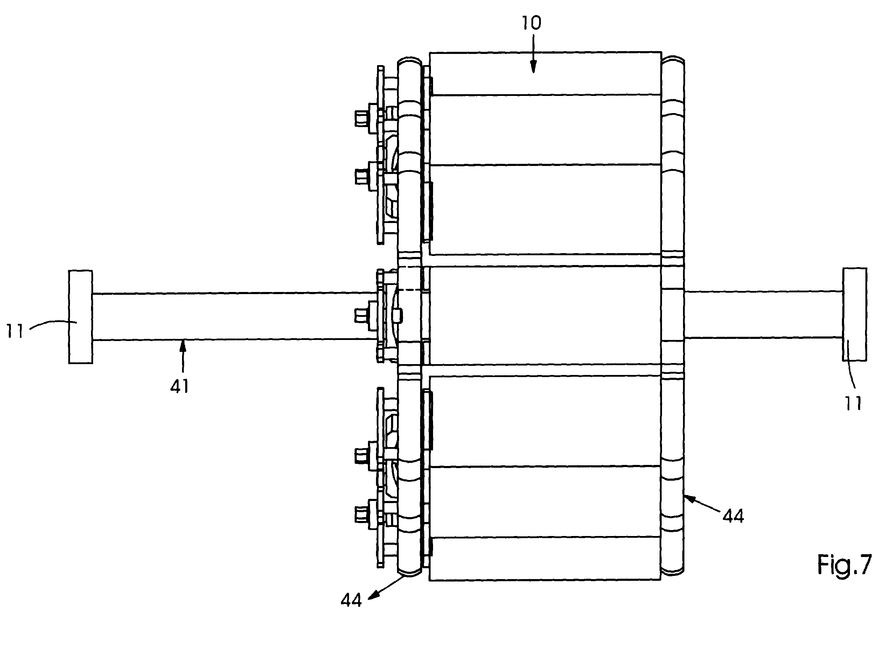

Fig. 7 zeigt eine alternative Ausführungsform des in Fig. 4-6 gezeigten Lagerungselements, mittels derer kürzere Bündel oder Stapel 10' transportiert und gelagert werden können. Der einzige Unterschied zwischen der in Fig. 4-6 gezeigten Ausführungsform und der in Fig. 7 gezeigten Ausführungsform besteht darin, dass in der in Fig. 7 gezeigten Ausführungsform die Rahmen 44 entlang der Welle 41 bezüglich der Nabe 11 weiter nach innen verschoben sind, um die kürzeren Bündel oder Stapel 10' aufnehmen zu können. In allen anderen Punkten sind die Ausführungsformen identisch.

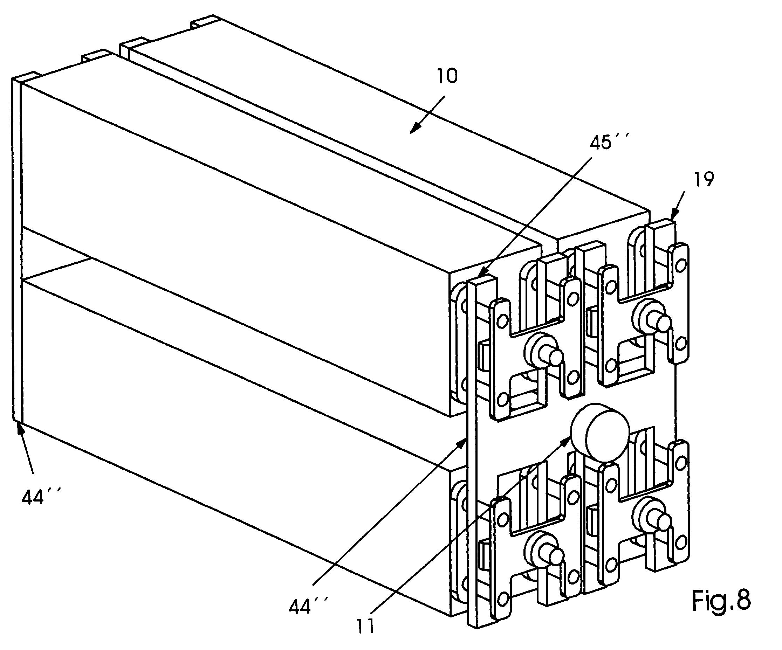

Fig. 8 zeigt eine alternative Ausführungsform eines beladenen Lagerungselements 8'', das zum Transport und zur Lagerung einer kleineren Anzahl von Bündeln oder Stapeln 10 als die in Fig. 4-6 gezeigte Ausführungsform geeignet ist. In der in Fig. 8 gezeigten Ausführungsform umfassen die Rahmen 44'' nur vier Klemmarme 45'', so dass nur vier Bündel oder Stapel 10 gehalten werden können, während die Rahmen 44 der in Fig. 4-6 gezeigten Ausführungsform acht Klemmarme 45 umfassen, so dass acht Bündel oder Stapel 10 erfasst werden können. In allen anderen Punkten sind die Ausführungsformen jedoch identisch, wobei die in Fig. 8 gezeigte Ausführungsform auch ähnlich wie die in Fig. 7 gezeigte Variante für kürzere Bündel oder Stapel ausgestaltet sein kann.

Das automatische Lager- und Entnahmesystem 5 kann auf der Basis bekannter Lagerungselemente aufgebaut sein, welche zur Lagerung von gerollten oder auf Paletten abgelegten Produkten eingesetzt werden, wie z. B. die automatischen Produkthandhabungssysteme der Firma Activ Systems oder Murata Automated Systems Inc. Die Einzelheiten derartiger Systeme sind zwar bekannt, jedoch umfassen diese Systeme in der Regel einen Rahmen, welcher eine Anzahl von Lagerbereichen definiert. Eine Steuervorrichtung wie z. B. die Steuervorrichtung 100 überwacht die Zufuhr und Entnahme beladener Lagerungselemente 8 sowie von leeren Lagerungselementen 7 in dem automatischen Lager- und Entnahmesystem 5. Dies wird vorzugsweise durch das Anbringen von Strichcodeetiketten auf den Lagerungselementen erreicht, welche von an den Zufuhr- und Entnahmestellen des Lager- und Entnahmesystems 5 angeordneten Strichcodelesern gelesen werden. Durch die Überwachung der Position eines jeden Lagerungselements mittels mit der Steuervorrichtung gekoppelten Strichcodelesern kann die Steuervorrichtung feststellen, an welchem der Falzapparate 1 ein Lagerungselement 8 beladen wurde, und kann somit bestimmen, in welchem Lagerbereich in dem automatischen Lager- und Entnahmesystem 5 ein beladenes Lagerungselement 8 gelagen werden soll und zu welcher Anlege- und Entladevorrichtung 6 ein beladenes Lagerungselement 8 transportiert werden soll. Auf diese Weise wird sichergestellt, dass auf eine bestimmte Art gefalzte und bedruckte Signaturen zu der richtigen Anlege- und Entladevorrichtung 6 transportiert werden, von der sie der Bindemaschine B zugeführt werden, so dass die gefalzten Signaturen in der richtigen Reihenfolge zusammengetragen, geheftet und gebunden werden.

Sowohl die Förderbahnen 4 als auch die nicht gezeigten Transportbahnen im Innern des automatischen Lager- und Entnahmesystems 5 sind vorzugsweise als ein teilangetriebenes Förderbahnsystem ausgebildet, wie es z. B. unter dem Namen RAPID FLOW™ von der Firma Rapid Industries, Inc. in Louisville, Kentucky angeboten wird. Diese Transportsysteme umfassen Führungsbahnen, die mit den Naben 11 an den Lagerungselementen zusammenwirken können, und die wahlweise eine freie Bewegung der Naben 11 ermöglichen oder einen Schieber, eine Kette oder eine andere Vorrichtung umfassen können, welche die Naben 11 entlang der Führungsbahnen bewegt. Entlang der Führungsbahnen können verschiedene Weichen vorgesehen sein, um die Lagerungselemente entlang einer Vielzahl von Führungsbahnen zu führen. Die Weichen werden vorzugsweise von der Steuervorrichtung 100 gesteuert, damit gewährleistet ist, dass ein bestimmtes Lagerungselement entlang der korrekten Führungsbahn zu dem korrekten, seinem Strichcode entsprechenden Lagerbereich oder zu der korrekten Bearbeitungsstation transportiert wird.

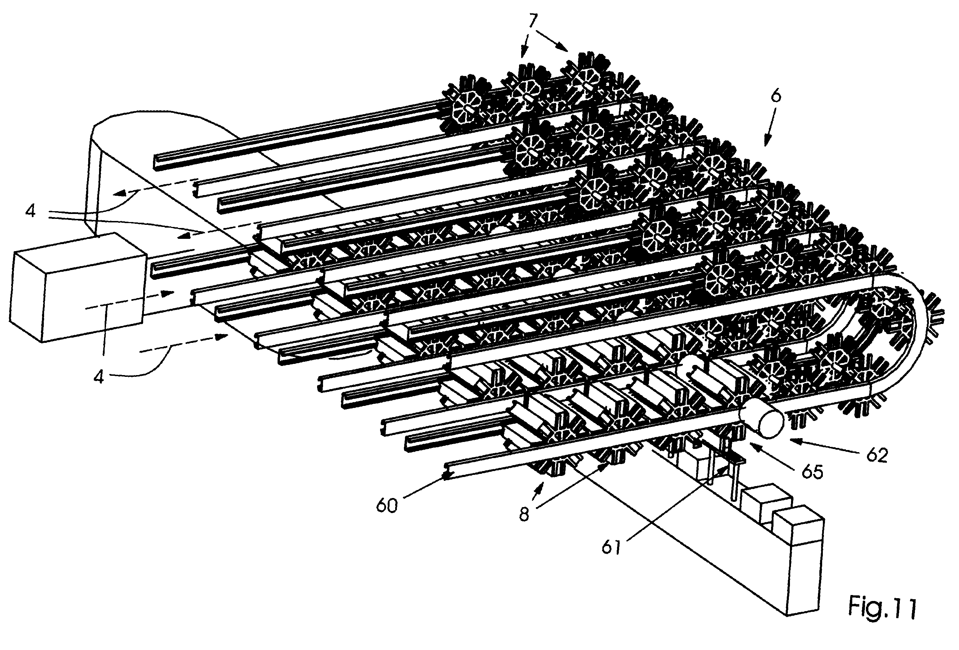

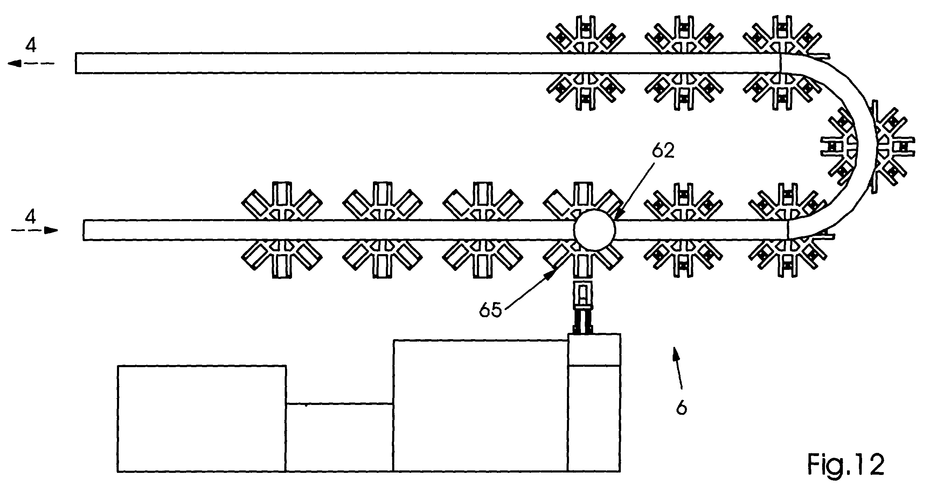

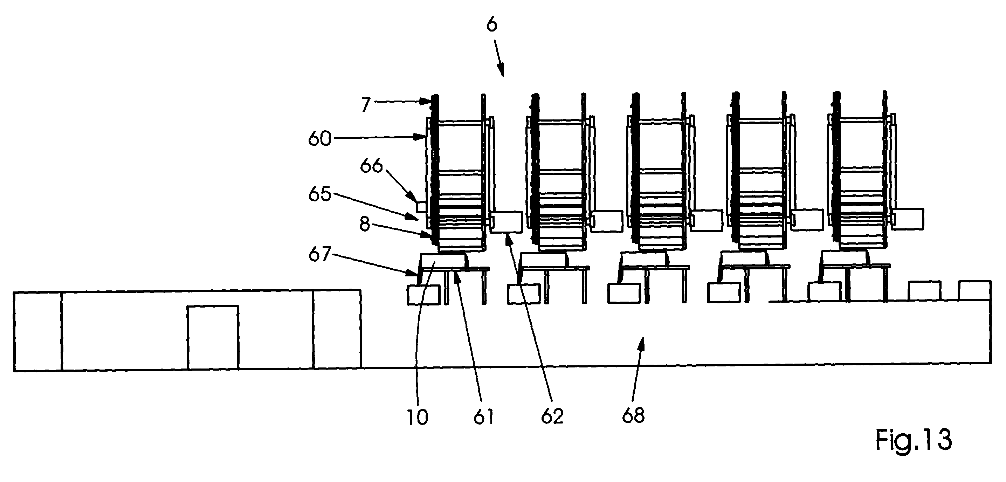

Fig. 11-13 sind Detailansichten des Anlege- und Entladesystems 6. Beladene Lagerungselemente 8 werden von dem automatischen Lager- und Entnahmesystem 5 weg entlang den Transportbahnen 4 in eine Führungsbahn einer Vielzahl von Führungsbahnen 60 bewegt. Die Führungsbahn 60, in die ein beladenes Lagerungselement 8 bewegt wird, wird von der Steuervorrichtung 100 auf der Basis der auf dem Lagerungselement aufgebrachten Strichcode-Information bestimmt, die in der Steuervorrichtung 100 gespeichert sind und die insbesondere angeben, an welchem Falzapparat 1 das entsprechende Lagerungselement 8 beladen wurde. Auf diese Weise können dem Anlege- und Entladesystem 6 bei Bedarf gefalzte Signaturen in der richtigen Reihenfolge zugeführt werden, so dass die Signaturen der Bindemaschine zugeführt, zusammengetragen, geheftet und zu einem fertigen Druckprodukt, z. B. einem Buch oder einer Zeitschrift, gebunden werden können.

Ein beladenes Lagerungselement 8 wird entlang einer bestimmten Führungsbahn 60 bis zu einer Entladeposition 65 bewegt. Jede der Führungsbahnen ist eine Fortführung des teilangetriebenen Transportsystems, welches die Förderbahn 4 und die Förderbahn im Innern des automatischen Lager- und Entnahmesystems 5 umfasst. An der Entladeposition 65 sind ein Schrittmotor und ein Getriebekasten 62 angeordnet, mittels dessen das beladene Lagerungselement 8 in definierten Schritten gedreht wird, damit die in dem Lagerungselement 8 gelagerten Bündel oder Stapel 10 nacheinander entladen werden können. Eine ebenfalls an der Entladeposition 65 angeordnete Lösevorrichtung 66, z. B. eine pneumatisch oder elektrisch betriebene, zurückziehbare Klemmvorrichtung, dreht die Schraube oder den Bolzen 18 in eine Richtung und löst so ein Bündel oder einen Stapel 10 von dem Lagerungselement 8. Die gelösten Bündel oder Stapel 10 werden, vorzugsweise mittels eines Magazinladers, an Entladevorrichtungen 61 übergeben, z. B. an unterhalb der Entladeposition 65 angeordnete schaltbare Förderbahnen, welche die gefalzten Signaturen der Bündel oder Stapel 10 einem Bindemaschinen-Anleger 67 zuführen. Der Anleger 67 führt der Bindemaschine B über ein Transportsystem 68 einzelne gefalzte Signaturen zu, die in der Bindemaschine B anschließend zusammengetragen, geheftet und zu einem fertigen Druckprodukt, z. B. einem Buch oder einer Zeitschrift, gebunden werden.

Nach dem vollständigen Entladen eines beladenen Lagerungselements 8 wird das Lagerungselement entlang der Förderbahn 60 zu der Transportbahn 4 und zurück zu dem automatischen Lager- und Entnahmesystem 5 transportiert, so dass es wieder verwendet werden kann. Auf diese Weise können die Lagerungselemente überwacht durch die Steuerungseinrichtung 100 permanent automatisch in dem System 5 zirkulieren, so dass an jedem Anlege- und Entladesystem 6 eine konstante Zufuhr von Bündeln oder Stapeln 10 erfolgt.

Die Bündel oder Stapel 10, die nicht an einem Anlege- und Entladesytem 6 benötigt werden, um dort eine konstante Zufuhr aufrechtzuerhalten, werden in dem automatischen Lager- und Entnahmesystem 5 gelagert, so dass sie automatisch entnommen werden können, wenn sie an dem ihnen zugeordneten Anlege- und Entladesystem 6 gebraucht werden. Durch den Einsatz einer Steuervorrichtung 100, durch Strichcodes auf jedem der Lagerungselemente 7, 8 und durch das gesteuerte, teilangetriebene Förderbahnsystem innerhalb des gesamten Systems S kann der gesamte Vorgang aus Herstellung, Transport, Lagerung, Zufuhr und Binden der Signaturen automatisch und ohne menschliches Zutun erfolgen. Demgemäß können durch dieses System bei akkurater Steuerung des gesamten Druck- und Bindeprozesses Arbeitskräfte eingespart werden.

### Liste der Bezugszeichen

- 1: Falzapparate
- 2: schaltbares Fördersystem
- 3: Beladevorrichtung
- 4: Förderbahn
- 5: automatisches Lager- und Entnahmesystem
- 6: Entladesystem
- 7: leere Lagerungselemente
- 8: beladene Lagerungselemente
- 10: Bündel/Stapel
- 11: Nabe
- 12: Auslage der Falzapparate
- 13: Bündel-Transportbahn
- 15: automatische Schaltvorrichtung
- 17: automatische Klemmvorrichtung
- 18: Gewindeschraube/-bolzen
- 19: Klemm- oder Greifelement
- 21: Vorderkantenelement
- 22: Beladeposition
- 31: Anlegerseite der Beladevorrichtung
- 32: Führungsbahn
- 33: Beladeposition
- 34: Austrittsende des Beladesystems
- 41: Welle
- 42: ortsfeste Lagertrommel
- 43: verstellbare Klemmlagertrommel
- 44: Rahmen
- 44'': Rahmen
- 45: Klemmarme
- 45'': Klemmarme
- 46: verstellbares Klemmelement
- 47: Klemmfläche
- 60: Führungsbahn
- 61: Entladevorrichtung
- 62: Getriebekasten
- 65: Entladeposition
- 66: Lösevorrichtung
- 67: Bindemaschinen-Anleger
- 68: Transportsystem
- 100: Steuervorrichtung
- B: Bindemaschine
- E: Lagerbereich für leere Lagerungselemente
- F: Lagerbereich für beladene Lagerungselemente
- P: Druckmaschine
- S: Transport- und Lagersystem
- f: Drehrichtung
- r: Drehrichtung

## Patentansprüche

1. Lagerelement (7, 8) zum Transport und zur Entnahme von Produkten mit einer Welle (41), an deren beiden Enden jeweils eine Nabe (11) drehbar angeordnet ist, mit einer Vielzahl von an der Welle (41) angeordneten Rahmen (45, 46) und mit mindestens einer an mindestens einem der Rahmen (45, 46) angeordneten Klemmvorrichtung (19).

2. Vorrichtung zum Transportieren und Lagern von Produkten mit einer Förderbahn (4), die eine Vielzahl von Führungsbahnen (60) umfasst,
**dadurch gekennzeichnet,**
dass die Vorrichtung zum Transportieren und Lagern wenigstens ein Lagerungselement gemäß Anspruch 1 aufweist, wobei jede der Naben (11) in einer der Führungsbahnen (60) angeordnet ist;
dass weiterhin eine Beladevorrichtung (3) vorgesehen ist, welche ein Produkt in der mindestens einen Klemmvorrichtung (19) festklemmt und
dass eine Entladevorrichtung (6) vorgesehen ist, welche die mindestens eine Klemmvorrichtung (19) von dem Produkt (10) löst.

3. Vorrichtung zum Transportieren und Lagern gestapelter Signaturen nach Anspruch 2,
**dadurch gekennzeichnet,**
dass die Beladestation (3) so ausgestaltet ist, dass sie eine Vielzahl von Produkten stapeln und die Klemmvorrichtung (19) eine Vielzahl von Produkten festklemmen kann und dass die Enfladevorrichtung (6) so ausgeführt ist, dass sie die Vielzahl von Signaturen wieder vereinzeln kann.

4. Verfahren zum Transportieren und Lagern von Produkten,
**gekennzeichnet durch**
die folgenden Schritte:
- Bereitstellen eines Lagerungselements (7, 8) mit mindestens einer Klemmvorrichtung (19);
- Transportieren des Lagerungselements (7, 8) auf einer Förderbahn (4) zu einer Beladestation (3);
- Beladen des Lagerungselements (7, 8) mit mindestens einem Produkt;
- Festklemmen des mindestens einen Produkts mit der mindestens einen Klemmvorrichtung (19);
- Transportieren des Lagerungselements (7, 8) auf der Förderbahn (4) zu einem Lagerbereich (F);
- Lagern des Lagerungselements (7, 8) in dem Lagerbereich (F);
- Transportieren des Lagerungselements (7, 8) auf einer Förderbahn zu einer Entladestation (6);
- Lösen des mindestens einen Produkts mittels der mindestens einen Klemmvorrichtung (19) und
- Entladen des mindestens einen Produkts von dem Lagerungselement (7, 8).

5. Verfahren zum Transportieren und Lagern von Signaturen,
**gekennzeichnet durch**
die folgenden Schritte:
- Bereitstellen eines Lagerungselements (7, 8) mit mindestens einer Klemmvorrichtung (19);
- Transportieren des Lagerungselements (7, 8) auf einer Förderbahn (4) zu einer Beladestation (3);
- Stapeln einer Vielzahl von Signaturen;
- Beladen des Lagerungselements (7, 8) mit gestapelten Signaturen;
- Festklemmen der gestapelten Signaturen mit der mindestens einen Klemmvorrichtung (19);
- Transportieren des Lagerungselements (7, 8) auf der Förderbahn (4) zu einem Lagerbereich (F);
- Lagern des Lagerungselements (7, 8) in dem Lagerbereich (F);
- Transportieren des Lagerungselements (7, 8) auf einer Förderbahn (4) zu einer Entladestation (6);
- Lösen der gestapelten Signaturen mittels der mindestens einen Klemmvorrichtung (19);
- Entladen der gestapelten Signaturen von dem Lagerungselement (7, 8) und
- Vereinzeln der gestapelten Signaturen.
